# EUROPÄISCHE PATENTSCHRIFT

(11) **EP 1 072 456 B1**
(45) Veröffentlichungstag und Bekanntmachung des Hinweises auf die Patenterteilung: **21.04.2004**
(21) Anmeldenummer: 00115603.3
(22) Anmeldetag: 20.07.2000
(51) Int. Cl.: B60J 7/185

(54) **Zuzieh- und Verriegelungsvorrichtung zum lösbaren Verbinden eines Fahrzeugdaches mit einem Karosseriebauteil**
Tensioning and locking device for releasibly fixing a vehicle roof to a vehicle body part
Dispositif de tension de fermeture pour fixer de façon amovible un toit de véhicule à une partie de carrosserie d'un véhicule

(30) Priorität: 29.07.1999 DE 19935738
(43) Veröffentlichungstag der Anmeldung: 31.01.2001
(73) Patentinhaber: ISE Industries GmbH, 58455 Witten (DE)
(72) Erfinder: Plesternings, Frank, 44269 Dortmund (DE)
(74) Vertreter: Patentanwälte Wenzel & Kalkoff

(56) Entgegenhaltungen:
- EP-A- 0 492 006
- EP-A- 0 611 673
- EP-A- 0 850 793
- DE-A- 19 539 085

## Beschreibung

Die Erfindung betrifft eine Zuzieh- und Verriegelungsvorrichtung zum lösbaren Verbinden eines Fahrzeugdaches mit einem Karosseriebauteil mit
- einem am Fahrzeugdach angeordneten und zwischen einer Öffnungs- und Schließlage verschwenkbaren Verschlußhaken, der mit einem Schloßteil am Karosseriebauteil in Eingriff bringbar ist.
- wobei das dem freien Ende des Verschlußhakens gegenüberliegende hintere Ende des Verschlußhakens verschiebbar und drehbar an einem Gehäuse gelagert ist.

Zuzieh- und Verriegelungsvorrichtungen weisen einen Verschlußhaken auf, der drehbar an einem Gehäuse angebracht ist. Zum Verschwenken des Verschlußhakens zwischen einer Öffnungs- und einer Schließlage ist eine Antriebseinheit direkt an der Drehachse des Verschlußhakens angeordnet. Eine gattungsgemäße Vorrichtung ist aus dem Dokument EP 0 611 673 A bekannt.

Die Bauform der Zuzieh- und Verriegelungsvorrichtung hängt dabei direkt von der Größe des Verschlußhakens ab. Die Größe des Verschlußhakens bestimmt darüber hinaus auch die Länge des Zuziehweges der Zuzieh- und Verriegelungsvorrichtung. Der Zuziehweg legt fest, welcher maximale Abstand zwischen der Zuzieh- und Verriegelungsvorrichtung und dem Schloßteil bestehen darf, damit diese miteinander in Eingriff kommen können.

Insbesondere bei einer vollständig automatischen Verriegelung des Fahrzeugdachs an dem Karosseriebauteil muß gewährleistet sein, daß der Verschlußhaken mit entsprechenden Bauteilen an der Karosserie in Eingriff kommt. Bei der Verwendung von kleinen Verschlußhaken, die eine kleine Bauform der Zuzieh- und Verriegelungsvorrichtung erlauben, ist dies jedoch nicht gewährleistet, so daß es vorkommen kann, daß der Verschlußhaken nicht mit entsprechenden Bauteilen an der Karosserie in Eingriff kommt.

Es ist daher Aufgabe der vorliegenden Erfindung, eine Zuzieh- und Verriegelungsvorrichtung der eingangs genannten Art zu schaffen, die wenig Platz beansprucht und einen langen Zuziehweg aufweist.

Erfindungsgemäß wird diese Aufgabe dadurch gelöst, daß
- ein mit einem Ende am Gehäuse schwenkbar gelagerter Führungshebel mit seinem anderen Ende drehbar an dem Verschlußhaken in dessen mittlerem Bereich angelenkt ist,
- ein Antriebshebel mit einem Ende schwenkbar an dem Gehäuse gelagert und an seinem anderen Ende mit einem Drehgelenk versehen ist,
- ein Steuerhebel, der mit einem Ende am hinteren Ende des Verschlußhakens drehbar angelenkt und mit seinem anderen Ende gelenkig mit dem Drehgelenk des Antriebshebels verbunden ist,
- wobei der Antriebshebel, der Steuerhebel und der Führungshebel derart angeordnet und mit dem Verschlußhaken verbunden sind, daß ein Drehen des Antriebshebels um seine Drehachse ein Verschwenken des Verschlußhakens zwischen der Öffnungs- und Schließlage bewirkt.

Im Gegensatz zum bekannten Stand der Technik weist der erfindungsgemäße Verschlußhaken keinen festen Drehpunkt am Gehäuse auf, weshalb sich der Zuziehweg gegenüber einem identischen, jedoch mit einem festen Drehpunkt am Gehäuse angeordneten Verschlußhaken erhöht. Die Öffnungs- bzw. Schließbewegung des Verschlußhakens setzt sich dazu aus zwei sich überlagernden Bewegungen zusammen. Dabei handelt es sich um eine Schwenkbewegung, bei der das hintere Ende des Verschlußhakens an dem Gehäuse verschoben wird, während gleichzeitig eine Drehbewegung des Verschlußhakens um den mit dem Führungshebel gebildeten Gelenkpunkt erfolgt.

Erzeugt wird die Bewegung des Verschlußhakens durch ein Drehen des Antriebshebels, der über den Steuerhebel das Ende des Verschlußhakens am Gehäuse verschiebt.

Mit dieser Ausbildung ist es möglich, eine einfache sowie kompakte Bauform der Zuzieh- und Verriegelungsvorrichtung zu erreichen, die trotzdem einen ausreichend langen Zuziehweg aufweist. Insgesamt wird ein einfacher und stabiler Aufbau mit relativ wenig beweglichen Teilen erreicht, so daß die Betriebssicherheit hoch ist. Zudem ragen der Steuerhebel, der Führungshebel und der Antriebshebel während der Schwenkbewegung des Verschlußhakens nur auf der dem freien Ende des Verschlußhakens zugewandten Seite des Gehäuses aus diesem hervor. Die Zuzieh- und Verriegelungsvorrichtung kann daher mit der dem Verschlußhaken abgewandten Seite des Gehäuses direkt am Fahrzeugdach befestigt werden.

Grundsätzlich ist es möglich, den Verschlußhaken über einen am hinteren Ende des Verschlußhakens befindlichen Zapfen in nur einem Langloch am Gehäuse zu führen. Demgegenüber weist das Gehäuse gemäß einer vorteilhaften Weiterbildung der Erfindung einander sich im Abstand gegenüberliegende Langlöcher auf, in denen der Verschlußhaken jeweils über einen am hinteren Ende des Verschlußhakens befindlichen Zapfen verschwenk- und verschiebbar ist. Hierdurch kann eine höhere Stabilität des Verschlußhakens bei der Öffnungs- bzw. Schließbewegung sowie in der Öffnungs- bzw. Schließlage erreicht werden. Einem möglichen Verkippen des Verschlußhakens oder einem Herausspringen aus den Langlöchern kann somit wirksam vorgebeugt werden.

Im Hinblick auf eine kompakte Bauweise kann besonders vorteilhaft vorgesehen werden, daß der Zapfen zur drehbaren Aufnahme des einen Endes des Steuerungshebels ausgebildet ist. Durch diese Ausführungsform kann auf ein zusätzliches Drehgelenk zur Aufnahme des einen Endes des Steuerungshebels verzichtet werden.

Grundsätzlich ist die räumliche Anordnung der Bauteile der Zuzieh- und Verriegelungsvorrichtung frei wählbar. Nach einer vorteilhaften Weiterbildung der Erfindung bilden in der Schließlage die Gelenkpunkte zwischen dem Antriebshebel, dem Führungshebel, dem Gehäuse, dem Steuerhebel und dem Verschlußhaken eine Ebene, was die Bildung eines flachen Gehäuses ermöglicht, das sich platzsparend in das Fahrzeugdach einsetzen läßt.

Nach einer weiteren Ausgestaltung der Erfindung weist das Gehäuse einen Längsschlitz auf, in dem der Verschlußhaken, der Führungshebel, der Steuerhebel und der Antriebshebel angeordnet und an einander gegenüberliegenden Längsseiten des Längsschlitzes gelagert sind. Dadurch kann ein stabilerer Aufbau der Zuzieh- und Verriegelungsvorrichtung erreicht werden. Einem Verbiegen bzw. Verkippen der Hebel kann somit wirksam vorgebeugt werden.

Nach einer vorteilhaften Weiterbildung der Erfindung weist das Gehäuse Öffnungen zur Aufnahme von Befestigungselementen zum Befestigen des Gehäuses an dem Fahrzeugdach auf. Die Anzahl der für die Befestigungselemente vorgesehenen Öffnungen, kann dabei in Abhängigkeit von den auftretenden Kräften so gewählt werden, daß ein sicherer Halt der Zuzieh- und Verriegelungsvorrichtung an dem Fahrzeugdach gewährleistet ist.

Grundsätzlich ist es möglich, den Steuerhebel und den Führungshebel einteilig auszubilden. Nach einer vorteilhaften Weiterbildung der Erfindung sind der Steuerhebel und der Führungshebel jedoch jeweils aus zwei an den Seitenflächen des Verschlußhakens verlaufenden Seitenteilen gebildet. Hierdurch wird eine erhöhte Stabilität der Vorrichtung und eine verbesserte Führung des Verschlußhakens beim Verschwenken zwischen der Öffnungs- und Schließlage erzielt.

Die Betätigung des Antriebshebels kann grundsätzlich auf beliebige Art und Weise erfolgen. Denkbar ist beispielsweise eine Handbetätigung über eine entsprechende am Antriebshebel angebrachte Betätigungsvorrichtung. Nach einer weiteren Ausgestaltung der Erfindung ist der Antriebshebel jedoch derart mit einer Welle verbunden, daß ein Drehen der Welle ein Drehen des Antriebshebels bewirkt. Durch die Verwendung einer derartigen Welle kann der Antrieb der Zuzieh- und Verriegelungsvorrichtung räumlich von der Zuzieh- und Verriegelungsvorrichtung getrennt werden.

Nach einer vorteilhaften Weiterbildung der Erfindung ist
- die Welle in der durch die Gelenkpunkte gebildeten Ebene an dem Gehäuse drehbar gelagert,
- sitzt der Antriebshebel im Bereich des einen Endes der Welle und
- ist im übrigen Bereich der Welle, vorzugsweise an ihrem anderen Ende, ein Drehantrieb zur Betätigung der Welle angeschlossen.

Diese Ausgestaltung der Erfindung erlaubt die Verwendung einer Welle unter Beibehaltung der flachen Bauform des Gehäuses. Der Anschluß der Welle an den Drehantrieb kann dabei in Abhängigkeit von den konstruktiven Voraussetzungen frei gewählt werden.

Grundsätzlich ist die Wahl des Drehantriebs zum Verdrehen der Welle frei wählbar. So ist auch die Verwendung eines Mutter-Spindelmechanismusses, einer manuellen Betätigungsvorrichtung oder eines auf der Welle angeordneten Zahnrads, das durch eine dazugehörige Kette angetrieben wird, denkbar. Nach einer vorteilhaften Weiterbildung der Erfindung besteht der Drehantrieb der Welle jedoch aus einem Schubstangenantrieb, der eine Schubstange und einen mit dieser gelenkig verbundenen weiteren Antriebshebel umfaßt, der mit der Welle fest verbunden ist. Die längsgerichtete Bewegung der Schubstange wird durch den Antriebshebel in eine rotatorische Bewegung der Welle umgesetzt. Diese Ausführungsform ermöglicht eine flache Bauweise des Drehantriebs, der ebenfalls im Fahrzeugdach untergebracht we=den kann. Zudem kann über die Länge des Antriebshebels eine Anpassung der Bewegungslänge der Schubstange an den Drehwinkel der Welle vorgenommen werden.

Nach einer bevcrzugten Ausführungsform der Erfindung ist ein drehbar am Gehäuse angebrachter Verriegelungshebel derart angeordnet und ausgebildet, daß er in der Schließlage das freie Ende des Verschlußhakens arretiert. Durch die Verwendung des Verriegelungshebels wird einem ungewollten Öffnen der Zuzieh- und Verriegelungsvorrichtung wirksam vorgebeugt. Zudem können die übrigen Bauteile in der Schließlage mechanisch entlastet werden, wenn sich der Verschlußhaken mit dem Verriegelungshebel in Eingriff befindet.

Vorteilhafterweise ist der Verriegelungshebel in Richtung auf die Arretierungspostion vorgespannt, wodurch einem ungewollten Entriegeln des Verriegelungshebels vorgebeugt werden kann. Zudem wird durch diese Ausgestaltung ein externes Ansteuern des Verriegelungshebels überflüssig, da dieser in Folge der Vorspannung in die Arretierungsposition gedrängt wird.

Nach einer Weiterbildung der Erfindung ist die Vorspannung über eine zwischen dem Gehäuse und einem Arm des Verriegelungshebels angeordnete Feder erzeugbar. Durch diese Ausgestaltung kann in einfacher Form die gewünschte Vorspannung in Richtung auf die Arretierungsposition erzeugt werden. Über die Wahl der Feder und den Abstand zwischen dem Gehäuse und dem Arm des Verriegelungshebels kann dabei die Höhe der Vorspannung bestimmt werden.

Nach einer weiteren Ausgestaltung der Erfindung weist der Verriegelungshebel einen Zapfen auf, der den Verschlußhaken in seiner Arretierungsposition hintergreift, wobei sich der Verriegelungshebel in einer Übertotlage befindet. Durch das Hintergreifen des Verschlußhakens, bei dem der Zapfen an der Rückseite des Verschlußhakens anliegt, kann die Schließlage in einfacher Weise gesichert werden, ohne daß dazu konstruktive Änderungen an dem Haken vorgenommen werden müssen. Durch die Übertotlage des Verriegelungshebels in der Arretierungsposition kann einer versehentlichen Entriegelung wirksam vorgebeugt werden.

Nach einer vorteilhaften Weiterbildung der Erfindung besteht der Verriegelungshebel aus zwei mit Ausnehmungen versehenen und an ihren freien Enden durch einen Zapfen verbundenen Seitenteilen, wobei der Antriebshebel zwischen den dem freien Ende gegenüberliegenden Enden der Seitenteile des Verriegelungshebels drehbar auf der Welle angeordnet ist. Durch diese Ausführungsform wird in ergänzender Weise die Stabilität der Zuzieh- und Verriegelungsvorrichtung erhöht. Zudem kann dadurch ausgeschlossen werden, daß sich der Zapfen infolge häufiger Beanspruchung verbiegt oder ausbricht.

Grundsätzlich bestehen eine Vielzahl von Möglichkeiten, den Verriegelungshebel zu Beginn des Öffnungsvorganges der Zuzieh- und Verriegelungsvorrichtung in eine Freigabeposition zu bewegen. Dies kann beispielsweise über zusätzliche Hebelmechanismen erfolgen, die jedoch den Aufbau der Zuzieh- und Verriegelungsvorrichtung erschweren. Nach einer Weiterbildung der Erfindung weist der Antriebshebel jedoch einen weiteren Schenkel auf, der mit einer Ausnehmung zum Aufnehmen eines Wälzkörpers versehen ist, wobei dieser abschnittsweise mit einer am Verriegelungshebel angeordneten Ausnehmung in Engriff steht, so daß ein Drehen des Antriebshebels aus der Schließlage in die Öffnungslage eine Mitnahme des Verriegelungshebels über den in der Ausnehmung angeordneten Bereich des Wälzkörpers bewirkt. Durch diese Weiterbildung der Erfindung kann in einfacher Weise erreicht werden, daß der Verriegelungshebel beim Öffnungsvorgang der Zuzieh- und Verriegelungsvorrichtung aus einer Verriegelungslage in eine Freigabelage bewegt wird. Die Wahl des Wälzkörpers und die daraus resultierende Wahl der Ausnehmung in dem Verriegelungshebel ist dabei grundsätzlich frei wählbar.

Nach einer vorteilhaften Ausgestaltung der Erfindung weisen die Seitenteile des Verriegelungshebel jeweils eine kreisförmige Ausnehmung auf, die mit Kugelkalotten einer in einer Durchgangsbohrung des weiteren Schenkels angeordneten Kugel in Eingriff stehen, wobei nach Erreichen einer Freigabeposition des Verschlußhakens die Kugel außer Eingriff mit den Ausnehmungen kommt und die Kugel auf den einander zugewandten Seiten der Seitenteile des Verriegelungshebels abrollt, bis die Öffnungslage des Verschlußhakens erreicht ist. Die Kugel gewährleistet einen geringen Rollwiderstand und bietet zugleich eine ausreichend große Mitnahmefläche in den Ausnehmungen der Seitenteile des Verriegelungshebels, so daß gewährleistet werden kann, daß der Verriegelungshebel über die Kugel mitgenommen wird.

Nach einer bevorzugten Ausführungsform der Erfindung weist das Gehäuse einen Zentrierbolzen auf, der beim Schließen des Fahrzeugdaches in ein Verriegelungsloch im Schloßteil eingreift. Durch die Verwendung eines Zentrierbolzens kann gewährleistet werden, daß das Fahrzeugdach in der gewünschten Position an dem Karosseriebauteil fixiert wird. Zudem können seitlich Kräfte über den Zentrierbolzen aufgenommen werden, sc daß die Zuzieh- und Verriegelungsvorrichtung mechanisch entlastet werden kann.

Nach einer weiteren Ausgestaltung der Erfindung ist der Zentrierbolzen mit Kunststoff ummantelt, wodurch Klappergeräuschen während der Fahrt und Schleifgeräuschen während des Schließvorgangs vorgebeugt werden kann.

Nachstehend wird ein Ausführungsbeispiel der Erfindung anhand der Zeichnungen erläutert. In den Zeichnungen zeigen:
- Fig. 1: Eine perspektivische Ansicht einer Zuzieh- und Verriegelungsvorrichtung mit daran angeschlossener Antriebseinheit;
- Fig. 2: eine perspektivische Ansicht der wesentlichen beweglichen Bauteile der Zuzieh- und Verriegelungsvorrichtung von Fig. 1 in einer Öffnungslage;
- Fig. 3: eine perspektivische Ansicht der in Figur 2 dargestellten Bauteile, ergänzt durch einen Verriegelungshebel und eine Feder, in einer Schließlage;
- Fig. 4: eine perspektivische Ansicht der gesamten Zuzieh- und Verriegelungsvorrichtung von Fig. 1 in der Öffnungslage;
- Fig. 5: eine weitere perspektivische Ansicht der gesamten Zuzieh- und Verriegelungsvorrichtung von Fig. 1 in einer Schließlage;
- Fig. 6: eine weitere perspektivische Ansicht der Zuzieh- und Verriegelungsvorrichtung von Fig. 1 mit einem angeschlossenen Schubstangenantrieb und eingesetzten Befestigungselementen.

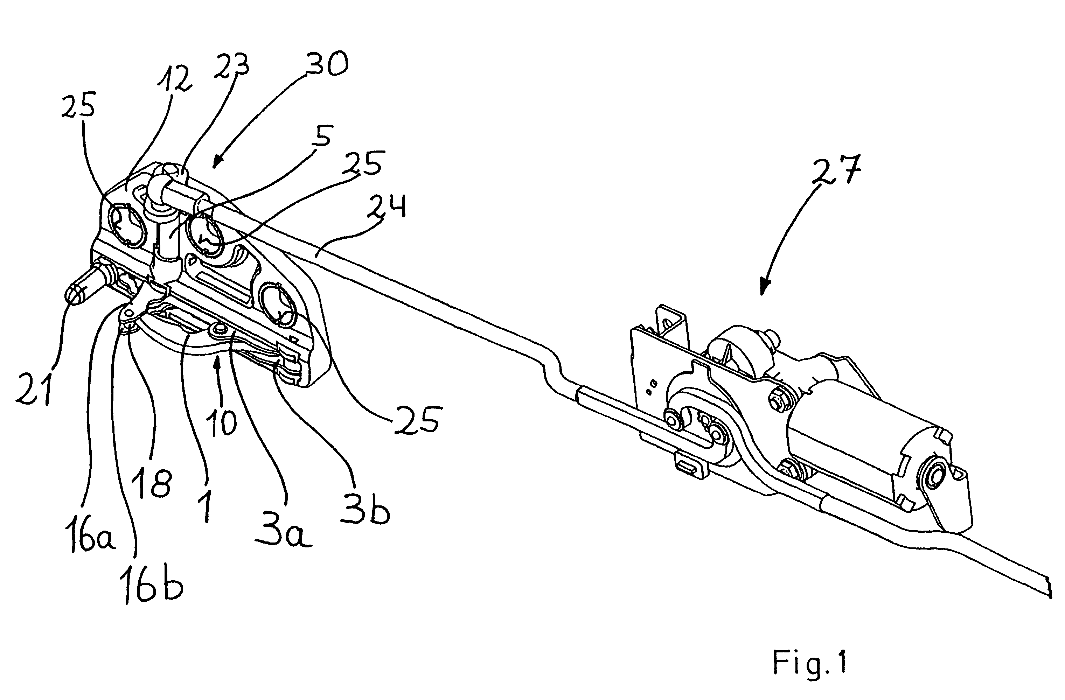

Figur 1 zeigt eine Ausführungsform einer Zuzieh- und Verriegelungsvorrichtung 30 mit einer angeschlossenen Antriebseinheit 27, die über eine Schubstange 24 und einen Antriebshebel 23 mit der Zuzieh- und Verriegelungsvorrichtung 30 verbunden ist.

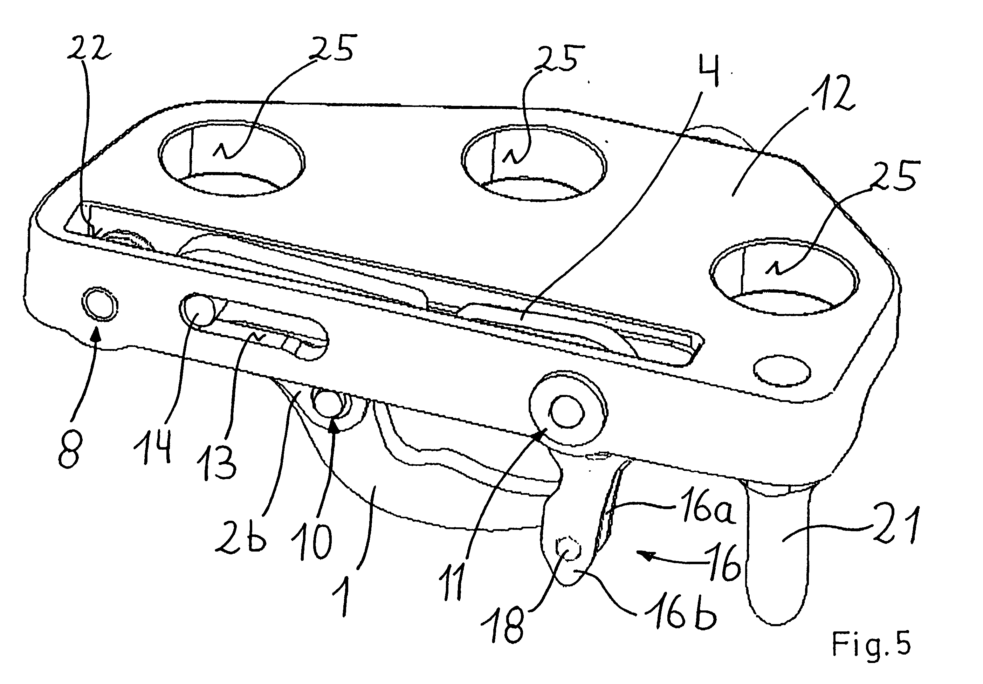

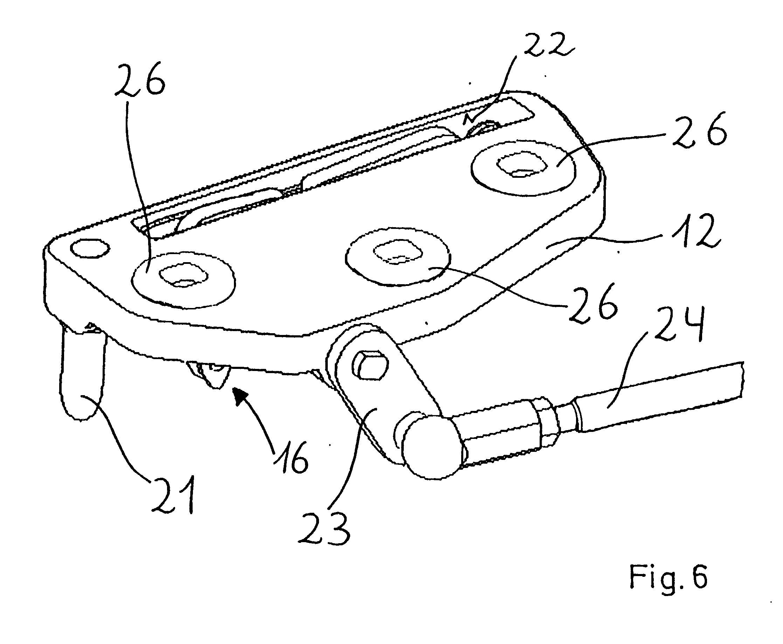

Die Zuzieh- und Verriegelungsvorrichtung 30 weist ein Gehäuse 12 auf, an dem ein Verschlußhaken 1, ein Führungshebel 2, ein Steuerhebel 3 und ein Antriebshebel 4 an einander gegenüberliegenden Längsseiten eines Längsschlitzes 22 geführt sind. Zudem weist das Gehäuse 12 drei Öffnungen 25 auf, die zur Aufnahme von Befestigungselementen 26 dienen, mittels derer die Zuzieh- und Verriegelungsvorrichtung 30 an einem Fahrzeugdach befestigt wird. Senkrecht zur Bewegungsebene des Verschlußhakens 1 ist eine Welle 5 am Gehäuse 12 drehbar gelagert. Jeweils ein Ende der Welle 5 ist dabei verdrehfest mit dem Antriebshebel 4 und dem weiteren Antriebshebel 23 verbunden (vgl. Fig. 5 und 6).

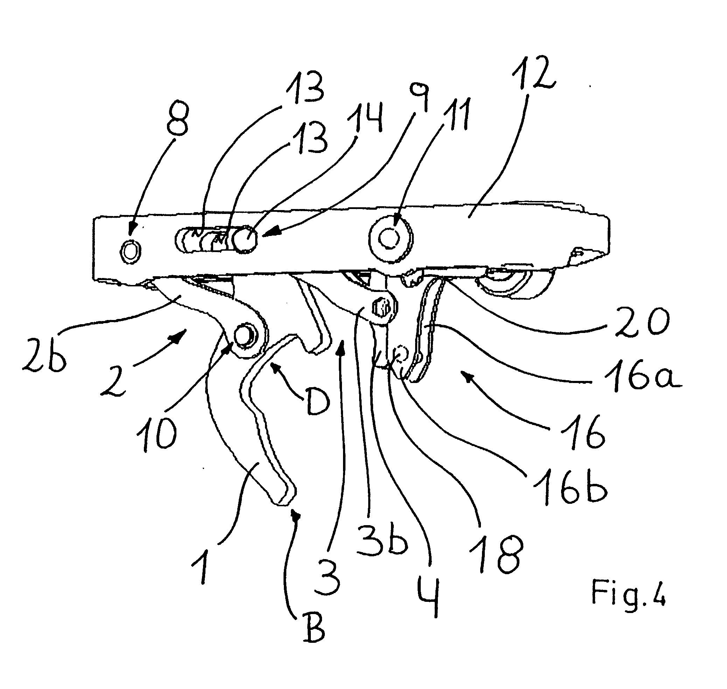

Entlang der Längsseiten des Längsschlitzes 22 weist das Gehäuse 12 zwei einander sich im Abstand gegenüberliegende Langlöcher 13 auf, von denen hier nur das außenliegende dargestellt ist (vgl. Fig. 4 und 5).

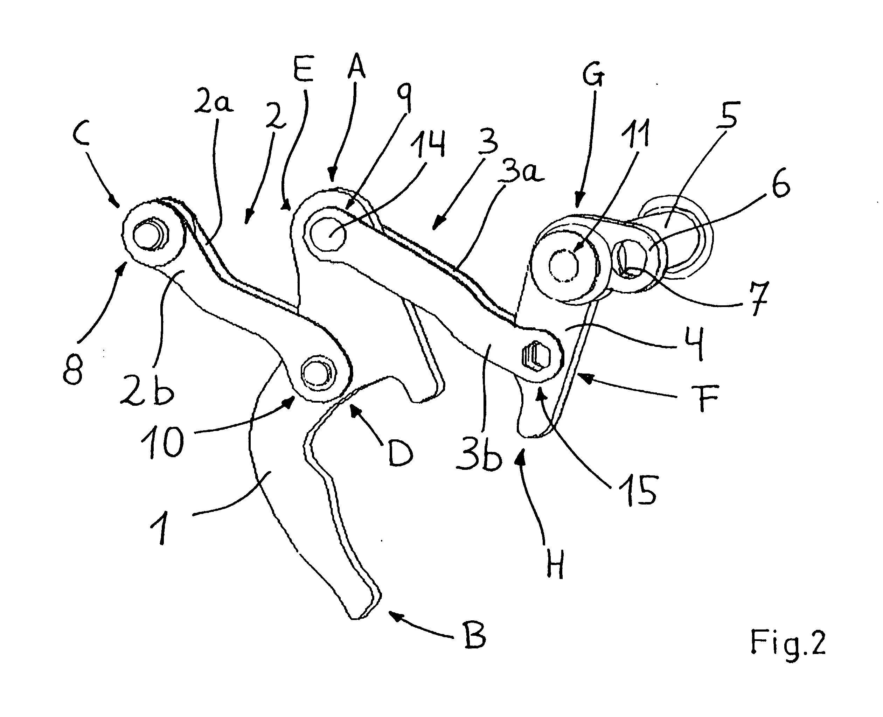

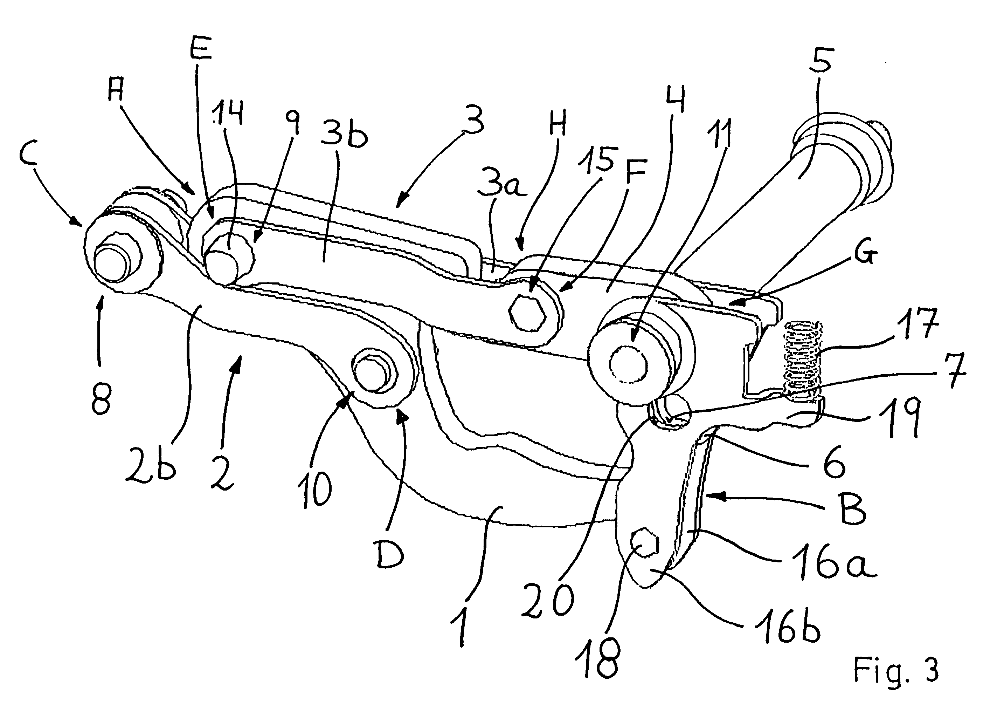

In den Langlöchern 13 ist der Verschlußhaken 1 über einen am hinteren Ende A des Verschlußhakens 1 befindlichen Zapfen 14 verschwenk- und verschiebbar. Der Zapfen 14 dient neben der Führung des Verschlußhakens 1 am Gehäuse 12 auch zur Aufnahme eines Endes E des Steuerhebels 3. Dabei setzt sich der Steuerhebel 3 ebenso wie der Führungshebel 2 aus zwei Seitenteilen 2a, 2b und 3a, 3b zusammen, die jeweils an den Seitenflächen des Verschlußhakens 1 verlaufen. Der Führungshebel 2 ist mit einem Ende C im Bereich hinter dem Ende des Verschlußhakens 1 an dem Gehäuse 12 und mit seinem anderen Ende D im mittleren Bereich des Verschlußhakens 1 drehbar gelagert. Die mit dem Gehäuse 12 gebildete Drehachse befindet sich dabei in der Verlängerung der durch den Gelenkpunkt 11 und den Gelenkpunkt 9 gebildeten Linie direkt hinter dem Gelenkpunkt 9. Das andere Ende F des Steuerhebels 3 ist gelenkig mit einem am anderen Ende H des Antriebshebels 4 angeordneten Drehgelenk 28 verbunden. Mit einem Ende G ist der Antriebshebel 4 verdrehfest auf einem Ende der Welle 5 angeordnet. Die Welle 5 ist dabei in der durch die Gelenkpunkte 8, 9, 11, 15 gebildeten Ebene an dem Gehäuse 12 drehbar gelagert (vgl. Fig. 2 und 3).

Ein Verriegelungshebel 16 besteht aus zwei mit Ausnehmungen 20 versehenen und an ihren freien Enden durch einen Zapfen 18 verbundene Seitenteile 16a, 16b. In der Schließlage hintergreift der Zapfen 18 den Verschlußhaken 1, wobei sich der Verriegelungshebel 16 in einer Übertotlage befindet. Das dem freien Ende gegenüberliegende Ende des Verriegelungshebels 16 ist ebenfalls an dem den Antriebshebel 4 aufweisenden Ende der Welle 5 drehbar angeordnet. Der Antriebshebel 4 ist dabei derart auf der Welle 5 angeordnet, daß ein weiterer Schenkel 6 des Antriebshebels 4 zwischen den Seitenteilen 16a, 16b des Verriegelungshebels 16 auf dem Ende der Welle 5 angeordnet ist.

Eine Feder 17, die zwischen dem Gehäuse 12 und einem Arm 19 des Verriegelungshebels 16 angeordnet erzeugt eine Vorspannung des Verriegelungshebels 16 in Richtung auf die Arretierungsposition.

Der Schenkel 6 weist eine Durchgangsbohrung 7 auf, die zur Aufnahme einer hier nicht dargestellten Kugel dient. Kugelkalotten der Kugel ragen dabei in die entsprechenden Ausnehmungen 20 der Seitenteile 16a, 16b des Verriegelungshebels 16.

An dem mit der Welle 5 verbundenen Ende gegenüberliegenden Ende des weiteren Antriebshebels 23 ist die in Längsrichtung verschiebbare Schubstange 24 der Antriebseinheit 27 drehbar angelenkt. Durch ein Verschieben der Schubstange 24 wird die Welle 5 mittels des weiteren Antriebshebels 23 verdreht, wodurch der Antriebshebel 4 bewegt wird. Dabei nimmt der Schenkel 6 den Verriegelungshebel 16 über die in den Ausnehmungen 20 angeordneten Kugelkalotten mit. Nach Erreichen einer Freigabeposition des Verschlußhakens 1 kommt die Kugel infolge des zunehmenden Verdrehwiderstandes des Verriegelungshebels 16 außer Eingriff mit den Ausnehmungen 20 und rollt auf den Innenflächen des Verriegelungshebels 16 bis zur Öffnungslage des Verschlußhakens 1 ab. Damit die Kugel auf den Innenseiten des Verriegelungshebels 16 abrollen kann, erhöht sich, hervorgerufen durch die von der Kugel erzwungene Dehnung, der Abstand zwischen den Seitenflächen 16a, 16b des Verriegelungshebels 16.

Während des sich anschließenden Öffnungsvorgangs bewegt sich der Antriebshebel 4 mit dem anderen Ende H um die mit der Welle 5 gebildeten Drehachse. Das Ende des Verschlußhakens 1 wird dabei im Langloch 13 in Richtung auf die Welle 5 verschoben. Der Führungshebel 2 bewirkt dabei, daß sich der Antriebshebel 4 gleichzeitig mit der Verschiebebewegung um den Drehpunkt D verdreht. Die Endposition der Verschließhakens 1 wird durch die Länge der Langlöcher 13 bestimmt. Eine voll geöffnete Position des Verschließhakens ist in Figur 2 und Figur 4 dargestellt.

Beim Schließen des Fahrzeugdaches greift ein senkrecht an der dem Verschlußhaken 1 zugewandten Seite des Gehäuses 12 angeordneter Zentrierbolzen 21 in ein Verriegelungsloch eines hier nicht dargestellten Schloßteils.

## Patentansprüche

1. Zuzieh- und Verriegelungsvorrichtung zum lösbaren Verbinden eines Fahrzeugdaches mit einem Karosseriebauteil mit
- einem am Fahrzeugdach angeordneten und zwischen einer Öffnungs- und Schließlage verschwenkbaren Verschlußhaken (1), der mit einem Schloßteil am Karosseriebauteil in Eingriff bringbar ist
- wobei das dem freien Ende (B) des Verschlußhakens (1) gegenüberliegende hintere Ende (A) des Verschlußhakens (1) verschiebbar und drehbar an einem Gehäuse (12) gelagert ist,
**dadurch gekennzeichnet, daß**
- ein mit einem Ende (C) am Gehäuse (12) schwenkbar gelagerter Führungshebel (2) mit seinem anderen Ende (D) drehbar an dem Verschlußhaken (1) in dessen mittlerem Bereich angelenkt ist,
- ein Antriebshebel (4) mit einem Ende (G) schwenkbar an dem Gehäuse (12) gelagert und an seinem anderen Ende (H) mit einem Drehgelenk (28) versehen ist,
- ein Steuerhebel (3), der mit einem Ende (E) am hinteren Ende (A) des Verschlußhakens (1) drehbar angelenkt und mit seinem anderen Ende (F) gelenkig mit dem Drehgelenk (28) des Antriebshebels (4) verbunden ist,
- wobei der Antriebshebel (4), der Steuerhebel (3) und der Führungshebel (2) derart angeordnet und mit dem Verschlußhaken (1) verbunden sind, daß ein Drehen des Antriebshebels (4) um seine Drehachse ein Verschwenken des Verschlußhakens (1) zwischen der Öffnungs- und Schließlage bewirkt.

2. Zuzieh- und Verriegelungsvorrichtung nach Anspruch 1, **dadurch gekennzeichnet, daß** das Gehäuse (12) einander sich im Abstand gegenüberliegende Langlöcher (13) aufweist, in denen der Verschlußhaken (1) jeweils über einen am hinteren Ende (A) des Verschlußhakens (1) befindlichen Zapfen (14) verschwenk- und verschiebbar ist.

3. Zuzieh- und Verriegelungsvorrichtung nach Anspruch 2, **dadurch gekennzeichnet, daß** der Zapfen (14) zur drehbaren Aufnahme des einen Endes (E) des Steuerungshebels (3) ausgebildet ist.

4. Zuzieh- und Verriegelungsvorrichtung nach einem oder mehreren der vorhergehenden Ansprüche, **dadurch gekennzeichnet, daß** in der Schließlage die Gelenkpunkte (8, 9, 11, 15) zwischen dem Antriebshebel (4), dem Führungshebel (2), dem Gehäuse (12), dem Steuerhebel (3) und dem Verschlußhaken (1) eine Ebene bilden, was die Bildung eines flachen Gehäuses (12) ermöglicht.

5. Zuzieh- und Verriegelungsvorrichtung nach einem oder mehreren der vorhergehenden Ansprüche, **dadurch gekennzeichnet, daß** das Gehäuse (12) einen Längsschlitz (22) aufweist, in dem der Verschlußhaken (1), der Führungshebel (2), der Steuerhebel(3) und der Antriebshebel (4) angeordnet und an einander gegenüberliegenden Längsseiten des Längsschlitzes (22) gelagert sind.

6. Zuzieh- und Verriegelungsvorrichtung nach einem oder mehreren der vorhergehenden Ansprüche, **dadurch gekennzeichnet, daß** das Gehäuse (12) Öffnungen (25) zur Aufnahme von Befestigungselementen zum Befestigen des Gehäuses (12) an dem Fahrzeugdach aufweist.

7. Zuzieh- und Verriegelungsvorrichtung nach einem oder mehreren der vorhergehenden Ansprüche, **dadurch gekennzeichnet, daß** der Steuerungshebel (3) und der Führungshebel (2) jeweils aus zwei an den Seitenflächen des Verschlußhakens (1) verlaufenden Seitenteilen (2a, 2b, 3a, 3b) gebildet sind.

8. Zuzieh- und Verriegelungsvorrichtung nach einem oder mehreren der vorhergehenden Ansprüche, **dadurch gekennzeichnet, daß** der Antriebshebel (4) derart mit einer Welle (5) verbunden ist, daß ein Drehen der Welle (5) ein Drehen des Antriebshebels (4) bewirkt.

9. Zuzieh- und Verriegelungsvorrichtung nach einem oder mehreren der vorhergehenden Ansprüche, **dadurch gekennzeichnet, daß**
- die Welle (5) in der durch die Gelenkpunkte (9, 11, 15) gebildeten Ebene an dem Gehäuse (12) drehbar gelagert ist,
- der Antriebshebel (4) im Bereich des einen Endes der Welle (5) sitzt und
- im übrigen Bereich der Welle (5), vorzugsweise an ihrem anderen Ende, ein Drehantrieb zur Betätigung der Welle (5) angeschlossen ist.

10. Zuzieh- und Verriegelungsvorrichtung nach einem oder mehreren der vorhergehenden Ansprüche, **dadurch gekennzeichnet, daß** der Drehantrieb der Welle (5) aus einem Schubstangenantrieb besteht, der eine Schubstange (24) und einen mit diesem gelenkig verbundenen weiteren Antriebshebel (23) umfaßt, der mit der Welle (5) fest verbunden ist.

11. Zuzieh- und Verriegelungsvorrichtung nach einem oder mehreren der vorhergehenden Ansprüche, **dadurch gekennzeichnet, daß** ein drehbar am Gehäuse (12) angebrachter Verriegelungshebel (16) derart angeordnet und ausgebildet ist, daß er in der Schließlage das freie Ende des Verschlußhakens (1) arretiert.

12. Zuzieh- und Verriegelungsvorrichtung nach einem oder mehreren der vorhergehenden Ansprüche, **dadurch gekennzeichnet, daß** der Verriegelungshebel (16) in Richtung auf die Arretierungsposition vorgespannt ist.

13. Zuzieh- und Verriegelungsvorrichtung nach einem oder mehreren der vorhergehenden Ansprüche, **dadurch gekennzeichnet, daß** die Vorspannung über eine zwischen dem Gehäuse (12) und einem Arm (19) des Verriegelungshebels (16) angeordnete Feder (17) erzeugbar ist.

14. Zuzieh- und Verriegelungsvorrichtung nach einem oder mehreren der vorhergehenden Ansprüche, **dadurch gekennzeichnet, daß** der Verriegelungshebel (16) einen Zapfen (18) aufweist, der den Verschlußhaken (1) in seiner Arretierungsposition hintergreift, wobei sich der Verriegelungshebel (16) in einer Übertotlage befindet.

15. Zuzieh- und Verriegelungsvorrichtung nach einem oder mehreren der vorhergehenden Ansprüche, **dadurch gekennzeichnet, daß** der Verriegelungshebel (16) aus zwei mit Ausnehmungen (20) versehenen und an ihren freien Enden durch einen Zapfen (18) verbundene Seitenteile (16a, 16b) besteht, wobei der Antriebshebel (4) zwischen den dem freien Enden gegenüberliegenden Enden der Seitenteile (16a, 16b) des Verriegelungshebels (16) drehbar auf der Welle (5) angeordnet ist.

16. Zuzieh- und Verriegelungsvorrichtung nach einem oder mehreren der vorhergehenden Ansprüche, **dadurch gekennzeichnet, daß** der Antriebshebel (4) einen weiteren Schenkel (6) aufweist, der mit einer Ausnehmung zum Aufnehmen eines Wälzkörpers versehen ist, wobei dieser abschnittsweise mit einer am Verriegelungshebel (16) angeordneten Ausnehmung in Eingriff steht, so daß ein Drehen des Antriebshebels (4) aus der Schließlage in die Öffnungslage eine Mitnahme des Verriegelungshebels (16) über den in der Ausnehmung angeordneten Bereich des Wälzkörpers bewirkt.

17. Zuzieh- und Verriegelungsvorrichtung nach einem oder mehreren der vorhergehenden Ansprüche, **dadurch gekennzeichnet, daß** die Seitenteile (16a, 16b) des Verriegelungshebel (16) jeweils eine kreisförmige Ausnehmung (20) aufweisen, die mit Kugelkalotten einer in einer Durchgangsbohrung (7) des weiteren Schenkels (6) angeordneten Kugel in Eingriff stehen, wobei nach Erreichen einer Freigabeposition des Verschlußhakens (1) die Kugel außer Eingriff mit den Ausnehmungen (20) kommt und die Kugel auf den einander zugewandten Seiten der Seitenteile (16a, 16b) des Verriegelungshebels (16) abrollt, bis die Öffnungslage des Verschlußhakens (1) erreicht ist.

18. Zuzieh- und Verriegelungsvorrichtung nach einem oder mehreren der vorhergehenden Ansprüche, **dadurch gekennzeichnet, daß** das Gehäuse (12) einen Zentrierbolzen (21) aufweist, der beim Schließen des Fahrzeugdachs in ein Verriegelungsloch im Schloßteil eingreift.

19. Zuzieh- und Verriegelungsvorrichtung nach einem oder mehreren der vorhergehenden Ansprüche, **dadurch gekennzeichnet, daß** der Zentrierbolzen (21) mit Kunststoff ummantelt ist.

## Claims

1. A closing and latching assembly for releasably fastening a vehicle roof at a body component, comprising
- a locking hook (1) arranged at the vehicle roof and pivotable between an opened and a closed position and capable of being brought into engagement with a lock member on the body component,
- wherein the rear end (A) of said locking hook (1), opposed to the free end (B) of said locking hook (1), is displaceably and pivotably supported at a housing (12),
**characterized in that**
- a guiding lever (2), one end (C) of which is pivotably supported at said housing (12), is linked at its other end (D) to said locking hook (1) at its center portion in a hinged fashion,
- a driving lever (4) has one end (G) pivotably supported at said housing (12) and is provided with a pivot joint (28) at its other end (H),
- a steering lever (3) has one end (E) pivotably linked to the rear end (A) of said locking hook (1) and the other end (F) pivotably connected with said pivot joint (28) of said driving lever (4),
- wherein said driving lever (4), said steering lever (3), and said guiding lever (2) are arranged and connected to said locking hook (1) in such a way that pivoting said driving lever (4) about its pivot axis causes said locking hook (1) to be pivoted between said opened and closed positions.

2. The closing and latching assembly according to claim 1, **characterized in that** said housing (12) has spaced opposite elongate holes (13), in which said locking lever (1) is pivotable and shiftable via a lug (14) at the rear end (A) of said locking hook (1).

3. The closing and latching assembly according to claim 2, **characterized in that** said lug (14) is adapted to pivotably support said one end (E) of said steering lever (3).

4. The closing and latching assembly according to one or more of the preceding claims, **characterized in that**, in said closed position, said pivot points (8, 9, 11, 15) between said driving lever (4), said guiding lever (2), said housing (12), said steering lever (3), and said locking hook (1) are arranged in one plane, which facilitates the construction of a flat housing (12).

5. The closing and latching assembly according to one or more of the preceding claims, **characterized in that** said housing (12) has a longitudinal slot (22) in which said locking hook (1), said guiding lever (2), said steering lever (3) and said driving lever (4) are arranged and supported at opposite longitudinal sides of said longitudinal slot (22).

6. The closing and latching assembly according to one or more of the preceding claims, **characterized in that** said housing (12) has openings (25) for receiving attachment elements to attach said housing (12) at said vehicle roof.

7. The closing and latching assembly according to one or more of the preceding claims, **characterized in that** said steering lever (3) and said guiding lever (2) are each formed of two lateral members (2a, 2b, 3a, 3b) extending at side surfaces of said locking hook (1).

8. The closing and latching assembly according to one or more of the preceding claims, **characterized in that** said driving lever (4) is connected to a shaft (5) in such a way that rotating said shaft (5) causes said driving lever (4) to be pivoted.

9. The closing and latching assembly according to one or more of the preceding claims, **characterized in that**
- said shaft (5) is rotatably supported at said housing (12) in the plane formed by the pivot points (9, 11, 15),
- said driving lever (4) is positioned in the area of one end of said shaft (5), and
- in the remaining area of said shaft (5), preferably at its other end, a rotary drive is coupled to operate said shaft (5).

10. The closing and latching assembly according to one or more of the preceding claims, **characterized in that** said rotary drive of said shaft (5) is comprised of a push rod drive comprising a push rod (24) and a further drive lever (23) linked to the former, wherein the drive lever (23) is rigidly attached to said shaft (5).

11. The closing and latching assembly according to one or more of the preceding claims, **characterized in that** a latching lever (16) pivotably mounted at said housing (12) is arranged and adapted in such a way that it retains the free end of said locking hook (1) in the closed position.

12. The closing and latching assembly according to one or more of the preceding claims, **characterized in that** said latching lever (16) is biased toward said retaining position.

13. The closing and latching assembly according to one or more of the preceding claims, **characterized in that** said biasing may be achieved by a spring (17) arranged between said housing (12) and an arm (19) of said latching lever (16).

14. The closing and latching assembly according to one or more of the preceding claims, **characterized in that** said latching lever (16) has a stud (18) reaching behind said locking hook (1) when in the retaining position, wherein said latching lever (16) is in an over-center position.

15. The closing and latching assembly according to one or more of the preceding claims, **characterized in that** said latching lever (16) is comprised of two lateral members (16a, 16b) having recesses (20) and linked at their free end by a stud (18), wherein said driving lever (4) is arranged between the ends, opposed to said free ends, of said lateral members (16a, 16b) of said latching lever (16), and pivotable on said shaft (5).

16. The closing and latching assembly according to one or more of the preceding claims, **characterized in that** said driving lever (4) has a further leg (6) equipped with a recess to receive a roller body, wherein the latter is partially engaged with a recess formed on said latching lever (16) so that pivoting said driving lever (4) from said closed position into said open position causes said latching lever (16) to be taken along over the area of said roller body arranged in said recess.

17. The closing and latching assembly according to one or more of the preceding claims, **characterized in that** said lateral members (16a, 16b) of said latching lever (16) each have a circular recess (20) engaged with spherical calottes of a ball arranged in a through bore (7) of said further leg (6), wherein after said locking hook (1) has reached a release position the ball is disengaged from said recess (20) and the ball rolls on the facing sides of said lateral members (16a, 16b) of said latching lever (16) until said locking hook (1) has reached its open position.

18. The closing and latching assembly according to one or more of the preceding claims, **characterized in that** said housing (12) has a centering stud (21) engaging a latching recess when the vehicle roof is closed.

19. The closing and latching assembly according to one or more of the preceding claims, **characterized in that** said centering stud (21) is coated in a plastics material.

## Revendications

1. Dispositif de tension de fermeture et de verrouillage pour relier de manière amovible un toit de véhicule à une partie de carrosserie avec
- un crochet de fermeture (1), placé sur le toit de véhicule et pivotant entre une position d'ouverture et de fermeture, qui peut être amené en prise avec une partie de serrure sur la partie de carrosserie,
- l'extrémité postérieure (A) du crochet de fermeture (1) qui est opposée à l'extrémité libre (B) du crochet de fermeture (1) étant positionnée déplaçable et rotative sur un boîtier (12),
**caractérisé en ce**
- **qu'**un levier de guidage (2) positionné pivotant avec une extrémité (C) sur le boîtier (12) est articulé rotatif avec son autre extrémité (D) sur le crochet de verrouillage (1 ) dans la zone du milieu de celui-ci,
- **qu'**un levier d'entraînement (4) est positionné pivotant avec une extrémité (G) sur le boîtier (12) et est pourvu, à son autre extrémité (H), d'une articulation rotative (28)
- **qu'**un levier de commande (3) est articulé rotatif avec une extrémité (E) à l'extrémité postérieure (A) du crochet de fermeture (1) et est relié avec son autre extrémité (F) de manière articulée à l'articulation rotative (28) du levier d'entraînement (4),
- le levier d'entraînement (4), le levier de commande (3) et le levier de guidage (2) étant placés et étant reliés au crochet de fermeture (1) de telle manière qu'une rotation du levier d'entraînement (4) autour de son axe de rotation provoque un pivotement du crochet de fermeture (1) entre la position d'ouverture et de fermeture.

2. Dispositif de tension de fermeture et de verrouillage selon la revendication 1, **caractérisé en ce que** le boîtier (12) présente des trous oblongs (13) opposés l'un à l'autre en étant espacés dans lesquels le crochet de fermeture (1) est pivotant et déplaçable respectivement par un tourillon (14) qui se trouve à l'extrémité postérieure (A) du crochet de fermeture (1).

3. Dispositif de tension de fermeture et de verrouillage selon la revendication 2, **caractérisé en ce que** le tourillon (14) est configuré pour le logement rotatif de l'une des extrémités (E) du levier de commande (3).

4. Dispositif de tension de fermeture et de verrouillage selon l'une ou plusieurs des revendications précédentes, **caractérisé en ce qu'**en position de fermeture les points d'articulation (8, 9, 11, 15) entre le levier d'entraînement (4), le levier de guidage (2), le boîtier (12), le levier de commande (3) et le crochet de fermeture (1) forment un plan, ce qui permet la formation d'un boîtier plat (12).

5. Dispositif de tension de fermeture et de verrouillage selon l'une ou plusieurs des revendications précédentes, **caractérisé en ce que** le boîtier (12) présente une fente longitudinale (22) dans laquelle le crochet de fermeture (1), le levier de guidage (2), le levier de commande (3) et le levier d'entraînement (4) sont placés et sont positionnés sur des côtés longitudinaux opposés l'un à l'autre de la fente longitudinale (22).

6. Dispositif de tension de fermeture et de verrouillage selon l'une ou plusieurs des revendications précédentes, **caractérisé en ce que** le boîtier (12) présente des ouvertures (25) pour le logement d'éléments de fixation pour fixer le boîtier (12) sur le toit de véhicule.

7. Dispositif de tension de fermeture et de verrouillage selon l'une ou plusieurs des revendications précédentes, **caractérisé en ce que** le levier de commande (3) et le levier de guidage (2) sont formés respectivement par deux parties latérales (2a, 2b, 3a, 3b) qui se trouvent sur les faces latérales du crochet de fermeture (1).

8. Dispositif de tension de fermeture et de verrouillage selon l'une ou plusieurs des revendications précédentes, **caractérisé en ce que** le levier d'entraînement (4) est relié à un arbre (5) de telle manière qu'une rotation de l'arbre (5) provoque une rotation du levier d'entraînement (4).

9. Dispositif de tension de fermeture et de verrouillage selon l'une ou plusieurs des revendications précédentes, **caractérisé en ce que**
- l'arbre (5) est positionné rotatif sur le boîtier (12) dans le plan formé par les points d'articulation (9, 11, 15),
- le levier d'entraînement (4) se trouve dans la zone de l'une des extrémités de l'arbre (5') et
- un entraînement rotatif pour l'actionnement de l'arbre (5) est raccordé dans le reste de la zone de l'arbre (5), de préférence à son autre extrémité.

10. Dispositif de tension de fermeture et de verrouillage selon l'une ou plusieurs des revendications précédentes, **caractérisé en ce que** l'entraînement rotatif de l'arbre (5) est constitué par un entraînement à bielle qui comprend une bielle (24) et un autre levier d'entraînement (23), relié de manière articulée à celui-ci, qui est relié de manière fixe à l'arbre (5).

11. Dispositif de tension de fermeture et de verrouillage selon l'une ou plusieurs des revendications précédentes, **caractérisé en ce qu'**un levier de verrouillage (16) fixé rotatif sur le boîtier (12) est placé et configuré de telle manière qu'en position de fermeture il bloque l'extrémité libre du crochet de fermeture (1).

12. Dispositif de tension de fermeture et de verrouillage selon l'une ou plusieurs des revendications précédentes, **caractérisé en ce que** le levier de verrouillage (16) est précontraint en direction de la position d'arrêt.

13. Dispositif de tension de fermeture et de verrouillage selon l'une ou plusieurs des revendications précédentes, **caractérisé en ce que** la précontrainte peut être générée par un ressort (17) placé entre le boîtier (12) et un arbre (19) du levier de verrrouillage (16).

14. Dispositif de tension de fermeture et de verrouillage selon l'une ou plusieurs des revendications précédentes, **caractérisé en ce que** le levier de verrouillage (16) présente un tourillon (18) qui a prise par derrière le crochet de fermeture (1) dans sa position d'arrêt, le levier de verrouillage (16) se trouvant dans une position au-dessus du point mort.

15. Dispositif de tension de fermeture et de verrouillage selon l'une ou plusieurs des revendications précédentes, **caractérisé en ce que** le levier de verrouillage (16) est constitué par deux parties latérales (16a, 16b) pourvues de creux (20) et reliées à leurs extrémités libres par un tourillon (18), le levier d'entraînement (4) étant placé rotatif sur l'arbre (5) entre les extrémités des parties latérales (16a, 16b) du levier de verrouillage (16) qui sont opposées aux extrémités libres.

16. Dispositif de tension de fermeture et de verrouillage selon l'une ou plusieurs des revendications précédentes, **caractérisé en ce que** le levier d'entraînement (4) présente un autre montant (6) qui est pourvu d'un creux pour loger un corps de roulement, celui-ci étant en prise par section avec un creux placé sur le levier de verrouillage (16) si bien qu'une rotation du levier d'entraînement (4) de la position de fermeture dans la position d'ouverture provoque un entraînement du levier de verrouillage (16) par la zone du corps de roulement qui est placée dans le creux.

17. Dispositif de tension de fermeture et de verrouillage selon l'une ou plusieurs des revendications précédentes, **caractérisé en ce que** les parties latérales (16a, 16b) du levier de verrouillage (16) présentent respectivement un creux circulaire (20) qui est en prise avec des calottes sphériques d'une bille placée dans une forure de passage (7) de l'autre montant (6). la bille venant hors prise avec les creux (20), après que le crochet de fermeture (1) ait atteint une position de déblocage, et la bille roulant sur les côtés opposés l'un à l'autre des parties latérales (16a, 16b) du levier de verrouillage (16) jusqu'à ce que la position d'ouverture du crochet de fermeture (1 ) soit atteinte.

18. Dispositif de tension de fermeture et de verrouillage selon l'une ou plusieurs des revendications précédentes, **caractérisé en ce que** le boîtier (12) présente un boulon de centrage (21) qui s'engrène dans un trou de verrouillage dans la partie de serrure lors de la fermeture du toit de véhicule.

19. Dispositif de tension de fermeture et de verrouillage selon l'une ou plusieurs des revendications précédentes, **caractérisé en ce que** le boulon de centrage (21) est enrobé de matière synthétique.
